# EUROPEAN PATENT APPLICATION

(11) **EP 2 395 215 A2**
(43) Date of publication of application: **14.12.2011**
(21) Application number: 11168938.6
(22) Date of filing: 07.06.2011
(51) Int. Cl.: F02C 9/28

(54) **Combustion reference temperature estimation**

(30) Priority: 11.06.2010 US 353877 P; 24.09.2010 US 889529
(71) Applicant: General Electric Company, Schenectady, NY 12345 (US)
(72) Inventor: Ewens, David Spencer, Greenville, SC South Carolina 29615 (US); Pinson, Mark William, Greenville, 29615 (US)
(74) Representative: Bedford, Grant Richard

(57) **Abstract**

Methods for improved accuracy in estimating a combustion reference temperature (CRT) are provided. In one embodiment, the invention provides a method of estimating a combustion reference temperature (CRT) in a gas turbine (92), the method comprising: obtaining a measurement of at least one dynamic operating condition of the gas turbine (92) selected from a group consisting of: an ambient condition, a compressor condition, a fuel condition, and a turbine condition; inputting a measurement of the at least one operating condition into a physics-based model; calculating at least one estimated internal state for the gas turbine (92) using the physics-based model; and calculating an estimated CRT based on the at least one gas turbine internal state.

## Description

Embodiments of the invention relate generally to turbomachines and, more particularly, to methods, systems, and program products for estimating a combustion reference temperature (CRT) in a turbine machine, such as a gas turbine.

A CRT is conventionally used in gas turbine control schemas as the basis for both staging and scheduling fuel during gas turbine operation. Staging involves enabling and/or disabling the various fuel circuits on a gas turbine utilizing multiple fuel circuits. Changes to the staging are typically termed mode transfers. Scheduling fuel circuit splits involves determining the split of total fuel mass flow delivered by each of the enabled fuel circuits. A CRT is typically estimated using an empirically-derived model based on a plurality of measured inputs (e.g., compressor discharge pressure, compressor discharge temperature, and/or turbine exhaust temperature).

The estimated CRT represents an estimate of a temperature internal to the gas turbine, which will include various elements of error. For example, conventional empirically-derived models necessarily sacrifice accuracy in their estimations across environmental and operating conditions in favor of simplicity and broad applicability. In addition, the static nature of such conventional models do not account for physical changes or differences, such as those that likely exist between different units, and throughout the lifespan of a given unit. Similarly, conventional models predictive of steady-state conditions do not account for heat transfer during thermal transients.

These and other limitations of conventional models result in inaccurate CRT estimates and the improper scheduling of fuel splits and mode transfers, potentially leading to combustion operability issues.

Embodiments of the invention provide methods, systems, and program products for improved accuracy in estimating a combustion reference temperature (CRT). In some embodiments of the invention, such improved accuracy is achieved using a high-fidelity, physics-based model, providing several advantages over traditional methods of estimating CRT.

In one embodiment, the invention provides a method of estimating a combustion reference temperature (CRT) in a gas turbine, the method comprising: obtaining a measurement of at least one dynamic operating condition of the gas turbine selected from a group consisting of: an ambient condition, a compressor condition, a fuel condition, and a turbine condition; inputting a measurement of the at least one operating condition into a physics-based model; calculating at least one estimated internal state for the gas turbine using the physics-based model; and calculating an estimated CRT based on the at least one gas turbine internal state.

In another embodiment, the invention provides a system for estimating a combustion reference temperature (CRT) in a gas turbine, the system comprising: a computing device; a measurement device for obtaining a measurement of at least one dynamic operating condition of the gas turbine selected from a group consisting of: an ambient condition, a compressor condition, a fuel condition, and a turbine condition; an input device for inputting a measurement of the at least one operating condition into a physics-based model; a calculator for calculating at least one estimated internal state for the gas turbine using the physics-based model; and a calculator for calculating an estimated CRT based on the at least one gas turbine internal state.

In yet another embodiment, the invention provides a program product stored on a computer-readable storage medium, which when executed estimates a combustion reference temperature (CRT) in a gas turbine, the program product comprising: program code for obtaining a measurement of at least one dynamic operating condition of the gas turbine selected from a group consisting of: an ambient condition, a compressor condition, a fuel condition, and a turbine condition; program code for inputting a measurement of the at least one operating condition into a physics-based model; program code for calculating at least one estimated internal state for the gas turbine using the physics-based model; and program code for calculating an estimated CRT based on the at least one gas turbine internal state.

In still another embodiment, the invention provides a method of operating a turbo-machine, the method comprising: obtaining a measurement of at least one dynamic operating condition of the gas turbine selected from a group consisting of: an ambient condition, a compressor condition, a fuel condition, and a turbine condition; inputting a measurement of the at least one operating condition into a physics-based model; calculating at least one estimated internal state for the gas turbine using the physics-based model; calculating an estimated CRT based on the at least one gas turbine internal state; and scheduling at least one of the following based on the CRT: a fuel circuit split or a combustion mode transfer.

Various features of this invention will be more readily understood from the following detailed description of the various aspects of the invention taken in conjunction with the accompanying drawings that depict various embodiments of the invention in which:
FIG. 1 shows a plot of combustion reference temperature (CRT) error using conventional estimation methods at varying ambient temperatures.
FIG. 2 shows a plot of CRT error using conventional estimation methods in a nominal unit and a degraded unit.
FIG. 3 shows a plot of CRT calculated during loading and unloading of a gas turbine accounting for transient effects and not accounting for transient effects.
FIG. 4 shows a plot of the effect of heat transfer rate on CRT estimation.
FIG. 5 shows a schematic view of a system according to an embodiment of the invention.
FIG. 6 shows a flow diagram of a method according to an embodiment of the invention.

It is noted that the drawings of the invention are not to scale. The drawings are intended to depict only typical aspects of the invention, and therefore should not be considered as limiting the scope of the invention. In the drawings, like numbering represents like elements among the drawings.

Various embodiments of the invention provide improved accuracy in the CRT estimation in gas turbines by relying on a high-fidelity, physics-based model, providing several advantages over traditional methods of estimating CRT.

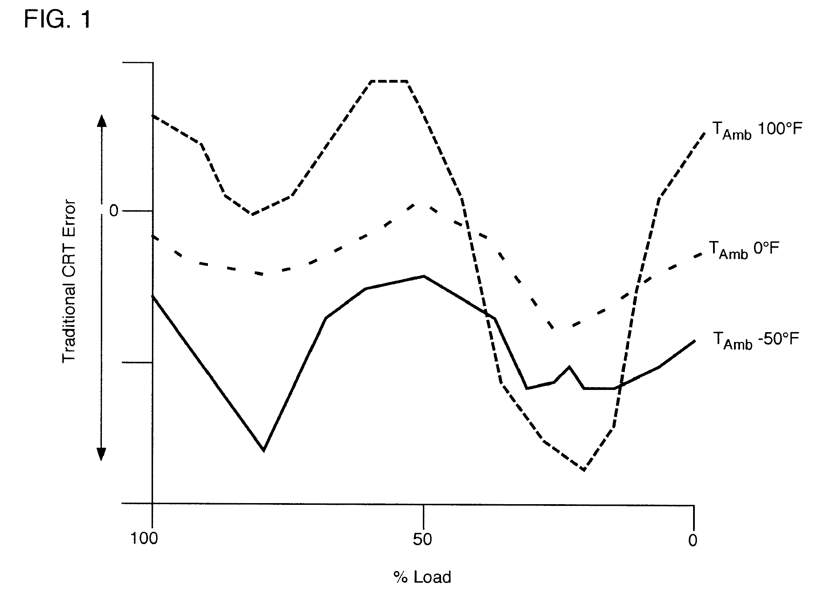

The utilization of a high-fidelity physics-based model alone produces a benefit. This model is better able to model the complex physical process of a gas turbine and more accurately model the internal gas turbine states over a wide range of operating conditions (e.g., load) and variations, including internal (e.g., manufacturing variation and degradation) and external (e.g., ambient condition) variations. In one embodiment of the invention, a method includes using the Adaptive Real-Time Engine Simulation (ARES) utilized in GE control systems and provides improved overall accuracy. Part of this improvement is due to the increased number of ARES model inputs by an order of magnitude compared to four inputs for the traditional CRT calculation. By accounting for additional variables as inputs, the accuracy of the model is improved over that with fewer inputs. The improvement in accuracy can be at least an order magnitude. See, e.g., FIG. 1, which shows relative degrees of error in traditional methods of CRT estimation at various loads and ambient temperatures.

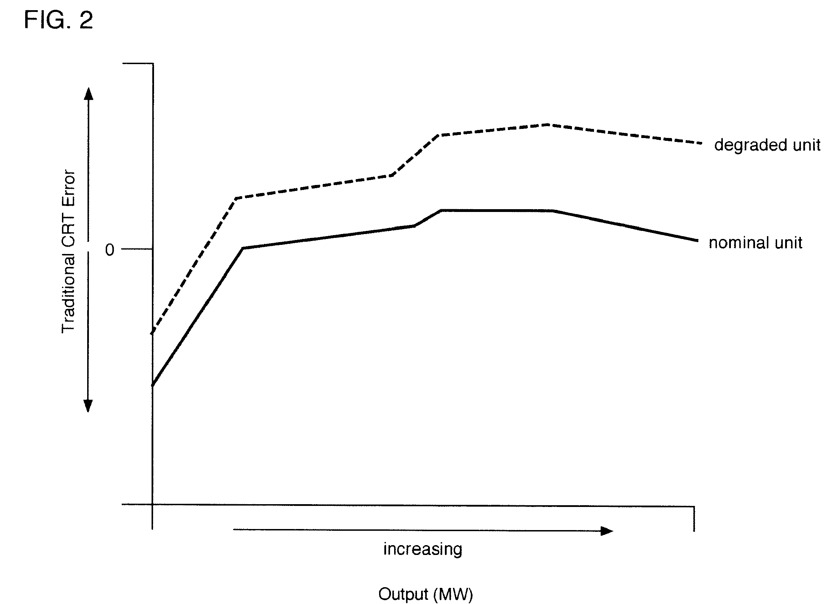

An additional improvement is to utilize a model that is adaptive, i.e., a model that utilizes one or more inputs to actively tune the controller model in real time to match the response of the given tuning inputs. As such, the model does not represent just an average unit, but rather it is tuned to match the current unit in its current state. The result is improved accuracy of any estimated output signals, given environmental variations and gas turbine internal variations, both unit to unit and over the product life. See, e.g., FIG. 2, which shows differences in traditional methods of CRT estimation in a nominal unit and a degraded unit over an output range.

Another advantage provided by embodiments of the invention is modeling of transient effects, rather than just steady state effects, as in known methods. One transient effect is heat transfer induced between the working fluid and gas turbine. Examples of thermal transient events include load changes and grid frequency events. Depending on the transient event, energy can be transferred to or from the working fluid, impacting the true internal states of the gas turbine. By modeling the heat transfer, the accuracy of internal states is improved during transient events as is CRT.

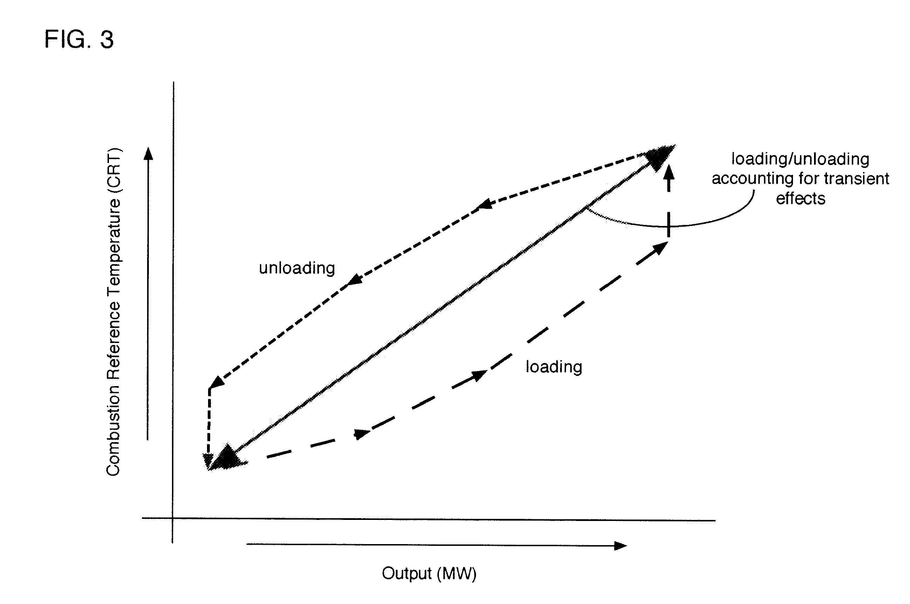

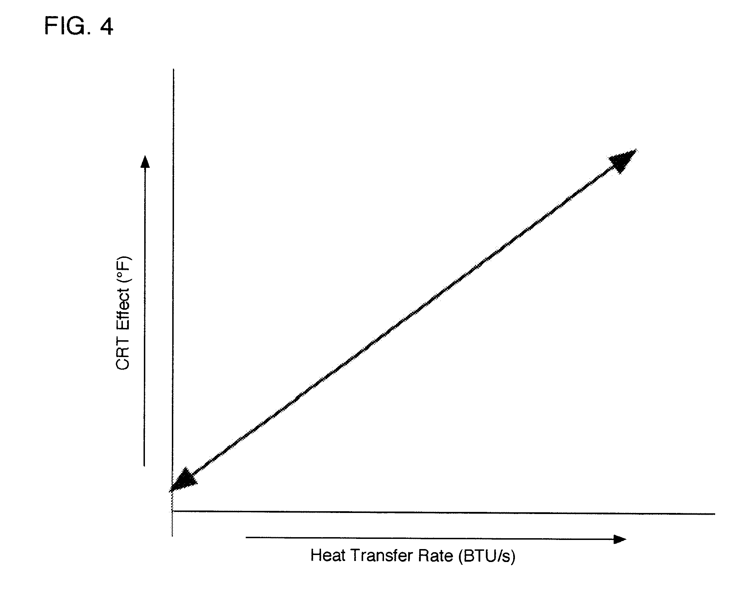

For example, FIG. 3 shows a plot of estimated CRT during loading and unloading of a gas turbine when accounting for transient effects and not accounting for transient effects. As can be seen, not accounting for transient effects results in underestimation of CRT during loading and overestimation of CRT during unloading. This error has been observed to be reduced by an order of magnitude or two, depending on the severity of the thermal transient event, by utilizing a heat transfer model. FIG. 4 shows a plot of the effect of heat transfer rate on estimated CRT.

Each of the described factors alone, as well as their combination, improve the accuracy of the CRT estimation. This improved CRT accuracy results in increased accuracy of staging and scheduling of fuel splits, which in turn improves the combustor operability and robustness.

In one embodiment of the invention, one or more dynamic operating conditions may be measured and input into a physics-based model to estimate a CRT of a gas turbine. As used herein, a dynamic operating condition is an operating condition that changes and is amenable to measurement. Typically, a dynamic operating condition in the context of the invention may change during a short period, e.g., within a period of a few minutes or a few seconds. Such operating conditions may include, for example, an ambient condition, a compressor condition, a fuel condition, and/or a turbine condition. Ambient conditions may include, for_ example, an ambient temperature, an ambient pressure, an ambient humidity and/or an ambient air density. A compressor condition may include, for example, a compressor inlet temperature, a compressor inlet pressure, a compressor inlet air density, a compressor discharge temperature, a compressor discharge pressure, an inlet guide vane position, a compressor air flow condition, a compressor extraction flow condition, and/or an inlet bleed heat flow condition. A fuel condition may include, for example, a fuel mass flow, a fuel temperature, a fuel density, a fuel heating value, and/or a fuel composition. A turbine condition may include, for example, a turbine exhaust temperature, a turbine exhaust pressure, a turbine exhaust gas density, and/or a turbine shaft speed. In some embodiments of the invention, the turbine condition is a thermal transient (i.e., a measure of heat transfer within the turbine). The prior statements provide examples but are not exhaustive lists.

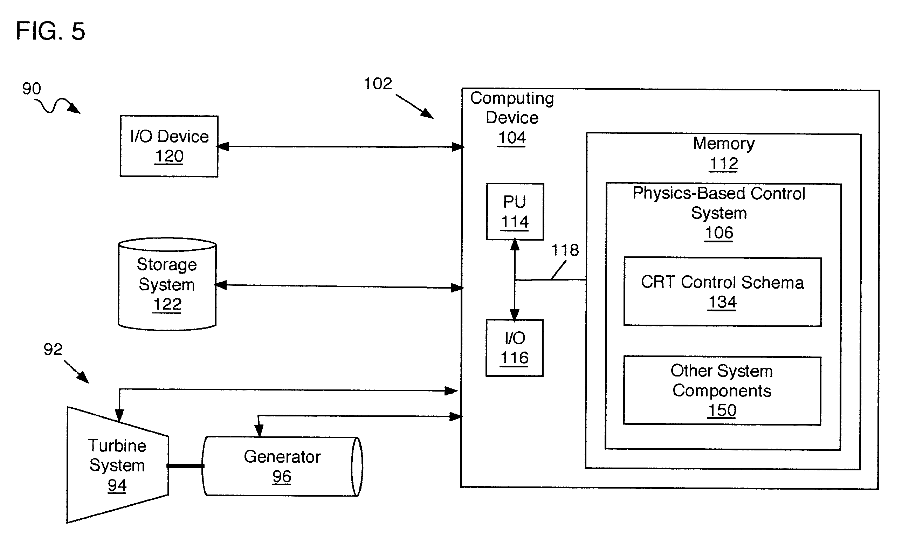

FIG. 5 shows a schematic of an illustrative environment 90 for a turbo-machine 92. As illustrated, turbo-machine 92 includes a turbine system 94 coupled to a generator 96. It is understood that each part may include any now known or later developed structure required for its operation. For example, turbine system 94 may include a gas turbine and/or a steam turbine, etc., with any number of low, intermediate or high pressure sections. Environment 90 includes a computer infrastructure 102 that can perform the various process steps described herein relative to the control schemas. In particular, computer infrastructure 102 is shown including a computing device 104 that comprises a physics-based control system 106, which enables computing device 104 to carry out the physics-based control schemas by performing the process steps of the disclosure. It is understood that physics-based control system 106 includes a number of other systems/modules for carrying out any now known or later developed control system based on modeling techniques for a turbo-machine 92.

Computing device 104 is shown including a memory 112, a processor (PU) 114, an input/output (I/O) interface 116, and a bus 118. Further, computing device 104 is shown in communication with an external I/O device/resource 120 and a storage system 122. As is known in the art, in general, processor 114 executes computer program code, such as model-based control system 106, that is stored in memory 112 and/or storage system 122. In some embodiments of the invention, processor 114 may be employed to calculate an estimated CRT. While executing computer program code, processor 114 can read and/or write data, such as temperature data or pressure data, to/from memory 112, storage system 122, and/or I/O interface 116. Bus 118 provides a communications link between each of the components in computing device 104. I/O device 120 can comprise any device that enables a user to interact with computing device 104 or any device that enables computing device 104 to communicate with one or more other computing devices. Input/output devices (including but not limited to keyboards, displays, pointing devices, etc.) can be coupled to the system either directly or through intervening I/O controllers.

In some embodiments of the invention, I/O device 120 may comprise a measuring device for measuring a dynamic operating condition of a turbine system 94 and/or an input device for inputting a measurement of such a dynamic operating condition into a schema contained within computing device 104.

In any event, computing device 104 can comprise any general purpose computing article of manufacture capable of executing computer program code installed by a user (e.g., a personal computer, server, handheld device, etc.). However, it is understood that computing device 104 and physics-based control system 106 are only representative of various possible equivalent computing devices that may perform the various process steps of the disclosure. To this extent, in other embodiments, computing device 104 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

One technical effect of a program product according to embodiments of the invention, when executed, is estimation of a CRT in a gas turbine. This technical effect may be achieved, for example, by obtaining a measurement of at least one dynamic operating condition of the gas turbine selected from a group consisting of an ambient condition, a compressor condition, a fuel condition, and a turbine condition, calculating at least one estimated internal state for the gas turbine using the physics-based model, into which a measurement of the at least one operating condition into a physics-based model, and calculating an estimated CRT based on the at least one gas turbine internal state.

Similarly, computer infrastructure 102 is only illustrative of various types of computer infrastructures for implementing the disclosure. For example, in one embodiment, computer infrastructure 102 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned and discussed further below, physics-based control system 106 enables computing infrastructure 102 to perform, among other things, the control schemas described herein. To this extent, physics-based control system 106 is shown including a combustion reference temperature (CRT) control schema 134. Operation of each of these schemas and related methods and systems is discussed further below. However, it is understood that the schemas shown in FIG. 5 can be implemented independently, combined, and/or stored in memory for one or more separate computing devices that are included in computer infrastructure 102. Further, it is understood that some of the schemas and/or functionality may not be implemented, or additional schemas and/or functionality may be included as part of environment 90.

CRT control schema 134 uses a physics-based model and employs one or more dynamic conditions, such as those described above, to estimate a CRT. A more accurate CRT improves the accuracy of scheduling combustor splits and mode transfers, thus avoiding combustor operability issues. This benefits, for example, gas turbine products that have a tight combustion operability window and scheduling such combustor splits and mode transfers is crucial to avoiding combustion operability issues and improving the robustness of the combustor operability. That is, a more accurate CRT estimate permits less compromise and improvement in emissions, performance, and combustor operability. In products that do not have a sufficient window to allow management of inaccuracies in the estimated CRT, CRT control schema 134 provides a robust solution. CRT control schema 134 also allows for the development and use of new products that require improved scheduling accuracy for emissions and performance benefits.

CRT control schema 134 does not require direct combustor boundary models and thus can be implemented with less effort. In this case, CRT control schema 134 with ARES, the true boundaries are inherent in the prescribed fuel split schedules that depend on the accuracy of the CRT. This method can supplement conventional methods in combustion modes that do not yet have direct boundary models.

CRT control schema 134 could also be used in a complementary fashion with current empirically-derived models, allowing the live measurement to tune the gas turbine model, so that a tuned model exists and can be utilized in the event of a measurement failure.

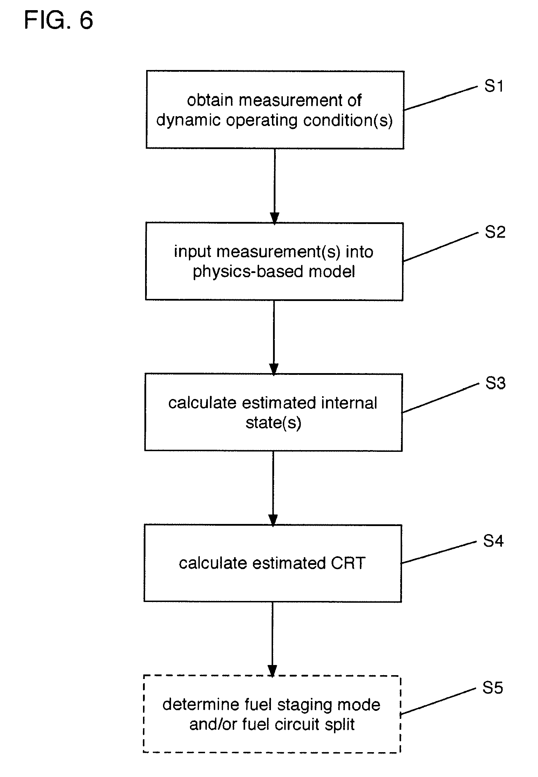

FIG. 6 shows a flow diagram of a method according to an embodiment of the invention. The method will be described here as applied to a gas turbine, but the method may similarly be applied to other devices, as noted above.

At S1, measurements of one or more dynamic operating conditions of the gas turbine are obtained. As used herein, "obtained," "obtaining," and similar terms are meant to include both directly obtaining by measurement as well as delivery, acceptance, and/or acquisition of a measurement otherwise made. As noted above, such dynamic operating conditions may include, for example, an ambient condition, a compressor condition, a fuel condition, and/or a turbine condition.

At S2, the measurement(s) obtained at S1 are input into a physics-based model and used to calculate one or more estimated internal states of the gas turbine at S3. At S4, the estimation calculated at S3 is used to calculate an estimated CRT. At S5, the estimated CRT of S4 is used to determine a fuel staging mode and/or a fuel circuit split, as noted above.

As will be appreciated by one skilled in the art, the control schemas described herein may be embodied as a system(s), method(s) or computer program product(s), e.g., as part of an overall control system for a turbo-machine. Accordingly, embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Embodiments of the present invention are described herein with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the preferred mode, and also to enable any person skilled in the art to practice the invention, including making and using any devices or systems and performing any related or incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method of estimating a combustion reference temperature (CRT) in a gas turbine, the method comprising:
   obtaining a measurement of at least one dynamic operating condition of the gas turbine selected from a group consisting of: an ambient condition, a compressor condition, a fuel condition, and a turbine condition;
   inputting the measurement of the at least one operating condition into a physics-based model;
   calculating at least one estimated internal state for the gas turbine using the physics-based model; and
   calculating an estimated CRT based on the at least one gas turbine internal state.
2. The method of clause 1, further comprising:
   performing at least one of the following based on the estimated CRT: determining a fuel staging mode or determining a fuel circuit split.
3. The method of any preceding clause, wherein the ambient condition is selected from a group consisting of: an ambient temperature, an ambient pressure, an ambient humidity, an ambient air density, and combinations thereof.
4. The method of any preceding clause, wherein the compressor condition is selected from a group consisting of: a compressor inlet temperature, a compressor inlet pressure, a compressor inlet air density, a compressor discharge temperature, a compressor discharge pressure, a compressor discharge air density, an inlet guide vane position, a compressor air flow condition, a compressor extraction flow condition, an inlet bleed heat flow condition, and combinations thereof.
5. The method of any preceding clause, wherein the fuel condition is selected from a group consisting of: a fuel mass flow, a fuel temperature, a fuel density, a fuel heating value, a fuel composition, and combinations thereof.
6. The method of any preceding clause, wherein the turbine condition is selected from a group consisting of: a turbine inlet temperature, a turbine inlet pressure, a turbine inlet gas density, a turbine exhaust temperature, a turbine exhaust pressure, a turbine exhaust gas density, a turbine shaft speed, and combinations thereof.
7. The method of any preceding clause, wherein the physics-based model is adaptive.
8. The method of any preceding clause, wherein the physics-based model includes a transient heat transfer model.
9. A system for estimating a combustion reference temperature (CRT) in a gas turbine, the system comprising:
   a computing device;
   a measurement device for obtaining a measurement of at least one dynamic operating condition of the gas turbine selected from a group consisting of: an ambient condition, a compressor condition, a fuel condition, and a turbine condition;
   an input device for inputting the measurement of the at least one operating condition into a physics-based model;
   a calculator for calculating at least one estimated internal state for the gas turbine using the physics-based model; and
   a calculator for calculating an estimated CRT based on the at least one gas turbine internal state.
10. The system of any preceding clause, further comprising:
   a determining device for determining at least one of the following based on the estimated CRT: a fuel staging mode or determining a fuel circuit split.
11. The system of any preceding clause, wherein the ambient condition is selected from a group consisting of: an ambient temperature, an ambient pressure, an ambient humidity, an ambient air density, and combinations thereof.
12. The system of any preceding clause, wherein the compressor condition is selected from a group consisting of: a compressor inlet temperature, a compressor inlet pressure, a compressor discharge temperature, a compressor discharge pressure, an inlet guide vane position, a compressor air flow condition, a compressor extraction flow condition, an inlet bleed heat flow condition, and combinations thereof.
13. The system of any preceding clause, wherein the fuel condition is selected from a group consisting of: a fuel mass flow, a fuel temperature, a fuel density, a fuel heating value, a fuel composition, and combinations thereof.
14. The system of any preceding clause, wherein the turbine condition is selected from a group consisting of: a turbine exhaust temperature, a turbine exhaust pressure, a turbine exhaust gas density, a turbine shaft speed, and combinations thereof.
15. The system of any preceding clause, wherein the physics-based model is adaptive.
16. The system of any preceding clause, wherein the physics-based model includes a transient heat transfer model.
17. The system of any preceding clause, wherein at least one of the following comprises a processor within the computing device: the calculator for calculating the at least one estimated internal state or the calculator for calculating the estimated CRT.
18. A program product stored on a computer-readable storage medium, which when executed estimates a combustion reference temperature (CRT) in a gas turbine, the program product comprising:
   program code for obtaining a measurement of at least one dynamic operating condition of the gas turbine selected from a group consisting of: an ambient condition, a compressor condition, a fuel condition, and a turbine condition;
   program code for calculating at least one estimated internal state for the gas turbine using the physics-based model, into which a measurement of the at least one operating condition into a physics-based model; and
   program code for calculating an estimated CRT based on the at least one gas turbine internal state.
19. The program product of any preceding clause, further comprising:
   program code for performing at least one of the following based on the estimated CRT: determining a fuel staging mode or determining a fuel circuit split.
20. The program product of any preceding clause, wherein the ambient condition is selected from a group consisting of: an ambient temperature, an ambient pressure, an ambient humidity, an ambient air density, and combinations thereof.

## Claims

1. A method of estimating a combustion reference temperature (CRT) in a gas turbine (94), the method comprising:
obtaining a measurement of at least one dynamic operating condition of the gas turbine (94) selected from a group consisting of: an ambient condition, a compressor condition, a fuel condition, and a turbine condition;
inputting the measurement of the at least one operating condition into a physics-based model;
calculating at least one estimated internal state for the gas turbine using the physics-based model; and
calculating an estimated CRT based on the at least one gas turbine internal state.

2. The method of claim 1, further comprising:
performing at least one of the following based on the estimated CRT: determining a fuel staging mode or determining a fuel circuit split.

3. The method of any preceding claim, wherein the ambient condition is selected from a group consisting of: an ambient temperature, an ambient pressure, an ambient humidity, an ambient air density, and combinations thereof.

4. The method of any preceding claim, wherein the compressor condition is selected from a group consisting of: a compressor inlet temperature, a compressor inlet pressure, a compressor inlet air density, a compressor discharge temperature, a compressor discharge pressure, a compressor discharge air density, an inlet guide vane position, a compressor air flow condition, a compressor extraction flow condition, an inlet bleed heat flow condition, and combinations thereof.

5. The method of any preceding claim, wherein the fuel condition is selected from a group consisting of: a fuel mass flow, a fuel temperature, a fuel density, a fuel heating value, a fuel composition, and combinations thereof.

6. The method of any preceding claim, wherein the turbine condition is selected from a group consisting of: a turbine inlet temperature, a turbine inlet pressure, a turbine inlet gas density, a turbine exhaust temperature, a turbine exhaust pressure, a turbine exhaust gas density, a turbine shaft speed, and combinations thereof.

7. The method of any preceding claim, wherein the physics-based model is adaptive.

8. The method of any preceding claim, wherein the physics-based model includes a transient heat transfer model.
